# EUROPEAN PATENT SPECIFICATION

(11) **EP 4 052 824 B1**
(45) Date of publication and mention of the grant of the patent: **04.11.2026**
(21) Application number: 21160195.0
(22) Date of filing: 02.03.2021
(51) Int. Cl.: B23C 5/06, B23C 5/20

(54) **METAL CUTTING MILLING TOOL**
METALLSCHNEIDENDES FRÄSWERKZEUG
OUTIL DE FRAISAGE DE DÉCOUPE MÉTALLIQUE

(43) Date of publication of application: 07.09.2022
(73) Proprietor: AB Sandvik Coromant, 811 81 Sandviken (SE)
(72) Inventor: BERGMAN, Stefan, 811 81 Sandviken (SE); ROMAN, Stefan, 818 81 Sandviken (SE)
(74) Representative: Sandvik

(56) References cited:
- EP-A1- 3 031 559
- WO-A1-2005/016583
- DE-A1- 102004 011 297
- DE-A1- 3 314 049
- US-A- 2 932 080
- US-A1- 2021 001 415

## Description

### TECHNICAL FIELD

The present invention relates to a metal cutting milling tool intended for chip removing machining and of the type that comprises a basic body rotatable in a predetermined direction around a center axis and having a front end surface and an envelope surface that extends axially backward from the front end surface. The milling tool further comprises an insert seat for receiving cutting inserts mounted in peripherally spaced-apart seats and having cutting edges for removing material from a work piece.

### BACKGROUND

From DE 10 2004 011297 A1 there is known a metal cutting milling tool as defined in the preamble of claim 1.

Metal cutting milling tools are equipped with chip rooms for accommodating a cutting insert and for transporting the milled chips away from the work surface. A compromise has always been necessary when designing the chip room on the milling tool. The cutting insert preferably should fit in the chip room and there also need to be enough room to transport a milled chip away from the work surface. A design that takes these mentioned matters into account will however have problems with strength in other parts of the milling tool. Therefore, it is a need for improvements in a metal cutting milling tool to improve the strength of the milling tool while still having a chip room large enough for accommodating a cutting insert.

It is therefore an object of the present invention to present an improved metal cutting milling tool that alleviates some of the above-mentioned problems.

### SUMMARY

According to the present invention, the above-mentioned object is achieved by means of a metal cutting milling tool having the features defined in claim 1. The metal cutting milling tool according to the present invention comprises: a body that is rotatable around a central axis in a rotational direction and comprising a front end, a plurality of land portions extending axially rearwards from the front end and a plurality of chip rooms extending axially rearwards from the front end. Each land portion of the plurality of land portions is delimited by a leading and a trailing surface in the rotational direction, the leading surface is rotationally ahead of the trailing surface and each land portion as part of the leading surface in a radially outer and forward region comprises an insert seat for receiving a cutting insert. Each chip room of the plurality of chip rooms is positioned between two adjacent land portions of the plurality of land portions and each chip room is delimited by a chip room surface comprising the trailing surface of a first land portion, the leading surface of a second land portion and a bottom surface positioned between the trailing surface and the leading surface. The first land portion is rotationally ahead of the second land portion and as seen in a cross section perpendicular to the central axis each chip room surface has a curvature with a smallest radius. The smallest radius in a second cross section and the smallest radius in a third cross section are larger than the smallest radius in a first cross section, wherein the first cross section is axially forward of the second cross section and the third cross section.

The present inventors have realized that this configuration alleviates the problem of improving the strength of the milling tool while still having a milling tool with a chip room large enough for accommodating a cutting insert. The relatively small radius at the first cross section will enable having a deep chip room in the area closest to the front end of the milling tool, where the cutting inserts are usually positioned, without removing too much material from the milling tool since the chip room will be narrow due to the relatively small radius. This enables fitting the cutting inserts within the chip room. Removing large amounts of material from the milling tool decreases the strength of the milling tool. Having a relatively large radius at the second cross section and the third cross section will enable having a shallow chip room in the area further from the front end of the milling tool compared to the first cross section. Having larger radii and shallower chip rooms in this area does not remove as much material from the milling tool in cross sections where strength is of utmost importance. A larger radius is also more resistant to crack initiation than a small radius is. The combination of having a relatively small radius at the first cross section and larger radii at the second cross section and third cross section thus improves the strength of the milling tool while still having a chip room large enough for accommodating a cutting insert.

The bottom surface of the chip room is the part of each cross section perpendicular to the central axis where the trailing surface and leading surface meet. The curvature with the smallest radius, in each cross section, of each chip room surface is found in the bottom surface of the chip room. The bottom surface is preferably also the part, of each cross section, closest to the central axis of the milling tool.

Insert seat more specifically refer to the insert seat bottom, i.e. the surface of the insert seat that is in contact with the lower side of the cutting insert. The lower side of the cutting insert being defined as the surface opposite the upper side of the cutting insert where the upper side comprises a rake surface. The insert seat is not necessarily one flat surface but is defined as the area enclosed by the points on the insert seat bottom that will be in contact with a cutting insert having a flat lower side. The insert seat can thus, for example, be a concave surface where only the outer points of the insert seat is in contact with a cutting insert.

Axially forward refer to being closer to the front end of the milling tool.

According to the invention, the first cross section is positioned axially along the axial length of the insert seat and wherein the second cross section and third cross section are positioned axially farther from the front end than the axial length of the insert seat.

This configuration ensures that the radius is relatively small at the axial position where the insert seat is positioned and relatively larger at axial positions farther from the front end of the milling tool. This enables having a chip room with a depth that accommodates a cutting insert at the front end while also having the milling tool optimized for strength of the milling tool.

The axial length of the insert seat refers to the axial distance along which the insert seat has its extension.

According to one embodiment, the smallest radius in the third cross section is larger than the smallest radius in the second cross section.

According to one embodiment, the smallest radius is strictly increasing between the smallest radius in the second cross section and the smallest radius in the third cross section.

According to one embodiment, the smallest radius increases linearly between the smallest radius in the second cross section and the smallest radius in the third cross section.

With this configuration an even better strength of the milling tool is achieved since the smallest radius gets larger and larger further away from the front end of the milling tool. This improves the strength of the milling tool and the smooth increase in radius ensures that no crack initiation points are created.

According to one embodiment, the smallest radius is approximately constant in all cross sections along the axial length of the insert seat.

This configuration ensures an optimum radius at the first cross section since this radius should optimally be set to achieve a chip room depth deep enough to accommodate a cutting insert.

According to one embodiment, the smallest radius in the third cross section is 2 - 4 times larger than the smallest radius in the first cross section.

According to one embodiment, the smallest radius in the third cross section is between 2 and 10 mm.

More preferably, the smallest radius in the third cross section is between 3 and 8 mm.

With this configuration it is ensured that the chip rooms are large enough to accommodate standard cutting inserts and still not so large that unnecessary amounts of material are removed from the milling tool. The specific ratio between the smallest radius in the third cross section and the smallest radius in the first cross section ensures that the radius does not change too quickly for crack initiation points to be created and still changes enough along the axial length of the chip room to achieve an optimized strength of the milling tool.

According to one embodiment, a depth of the chip room in a third cross section is smaller than a depth of the chip room in a first cross section.

The depth is defined in each cross section as the shortest distance from the bottom surface of the chip room surface to an imaginary circumferential extension of the peripheral surface of the milling tool, i.e. the circular arc obtained when two adjacent land portions are connected by an imaginary arc. The radial distance from the central axis of the milling tool to the bottom surface is further larger at the third cross section compared to at the first cross section.

This configuration ensures that the chip room does not have an unnecessary depth in cross sections far from the front end of the milling tool. Smaller depth of the chip room increases the strength of the milling tool.

According to one embodiment, the bottom surface of the chip room in all axial positions between the second cross section and the third cross section has the shape of a circular arc in a cross section substantially parallel to the lengthwise direction of the chip room.

The lengthwise direction of the chip room is the direction of a line that passes through the smallest radius at the second cross section and the smallest radius at the third cross section.

This configuration enables a smooth transition from a chip room with a relatively large depth close to the front end of the milling tool to a chip room with a relatively small depth axially farther from the front end of the milling tool. This smooth transition minimizes the risk for crack initiation points.

According to one embodiment, in the second cross section the chip room extends, in the circumferential direction, to an area located in the imaginary axial extension of the insert seat.

This configuration ensures that there is enough chip room space in the direct axial vicinity of the insert seat and therefore also implicitly in the axial extension of the cutting inserts where a large enough chip room is necessary to effectively transport the chips away from the worked surface.

The imaginary axial extension refers to the area that occupies the same circumferential position as the insert seat and is axially further from the front end than the insert seat.

### LIST OF DRAWINGS

Embodiments of the invention will now be described in detail with regard to the annexed drawings, in which:
Fig. 1 is a side view of the metal cutting milling tool according to an embodiment of the present invention,
Fig. 2 is another side view of the metal cutting milling tool shown in Fig. 1 with cutting inserts attached to the milling tool,
Fig. 3 is an end view of the metal cutting milling tool shown in Fig. 2 showing the front end of the milling tool, and
Fig. 4a-c are cross sections of the metal cutting milling tool as indicated in Fig. 1.
Fig. 5 is a cross section of the metal cutting milling tool as indicated in Fig. 1.

### DETAILED DESCRIPTION OF EMBODIMENTS

The following definitions are valid for all embodiments.

A seat pitch angle α is defined as the angle between a radius intersecting a radially outer point in the insert seat of a first land portion and a radius intersecting a corresponding point in a second land portion where the first land portion and the second land portion are adjacent consecutive land portions in the rotational direction.

An arc length AL is defined at the front end of the milling tool for each land portion as the circumferential distance along the radial periphery of the milling tool between the insert seat and the trailing surface for respective land portion.

A pitch angle β is defined as the angle between a line parallel to the upper side of a first cutting insert at the front end of the milling tool in a plane perpendicular to the central axis C and a similar parallel line to the upper side of a second insert where the second insert is an adjacent consecutive insert in the rotational direction of the milling tool.

An opening angle γ for respective cutting insert is defined as the angle between a line parallel to the upper side of a cutting insert at the front end of the milling tool in a plane perpendicular to the central axis C and a line parallel to the trailing surface, associated with the same chip room as the cutting insert, of the adjacent land portion.

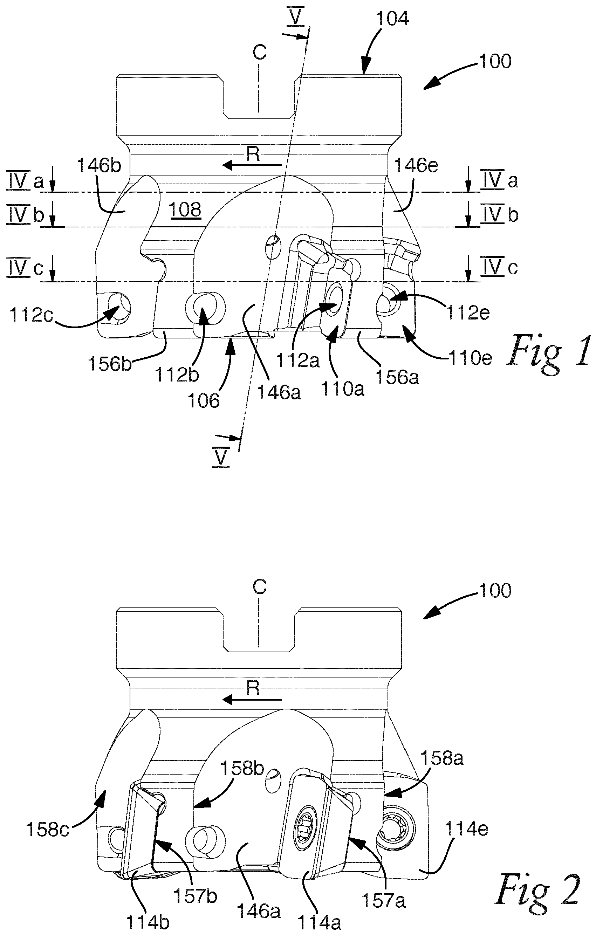

Reference is now made to Fig. 1 and Fig. 2 which show an embodiment according to the present invention. In the figure a metal cutting milling tool, generally designated 100, is shown. The metal cutting milling tool 100 having a rear end 104 for attachment in a rotatable tool holder (not shown), a front end 106 and a peripheral envelope surface 108. In this embodiment the peripheral envelope surface 108 is generally cylindrical in the region closest to the front end 106 and generally conical in the region approximate the cylindrical region.

The milling tool defines a central axis C, also being a longitudinal axis around which the milling tool rotates in rotational direction R. In the following description directions stated to be axially extending are in a direction substantially parallel to the central axis C and directions stated to be radially extending are in a direction substantially perpendicular to the central axis C.

The metal cutting tool 100 further comprises tangentially spaced apart chip rooms 146 for transporting milled chips away from the machined work surface. In between each chip room 146 is a land portion 156 located. The land portions 156 function as wings extending radially from the central axis C. The land portions 156 form the radially outer periphery of the milling tool 100. In the shown embodiment the outer periphery of the land portions 156 extend in an axial direction in the area closest to the front end 106 and further to the rear end 104 the outer periphery of the land portions 156 approaches the central axis C.

Each land portion 156 is delimited in the rotational direction R by a leading 157 and a trailing surface 158. The leading surface 157 is rotationally ahead of the trailing surface 158. Each leading surface 157 forms part of the delimiting surface of a corresponding chip room 146 and part of the delimiting surface of a corresponding land portion 156. Corresponding here refers to that features marked "a" in the figures are associated to other features marked "a" and features marked "b" are associated to other features marked "b" and so on. Each trailing surface 158 forms part of the delimiting surface of a chip room 146 with trailing surface 158b forming part of delimiting surface of chip room 146a, trailing surface 158c forming part of delimiting surface of chip room 146b and so on. Further, each trailing surface 158 forms part of a delimiting surface of a corresponding land portion 156.

Each leading surface 157 having an insert seat 110 for detachably mounted cutting inserts 114. In this embodiment all cutting inserts 114 are positioned at the front end 106 of the milling tool 100. If the milling tool 100 is to be used for face milling each cutting insert 114 has at least one cutting edge which is extending in a radial direction. If the milling tool 100 is to be used for square shoulder milling each cutting insert has at least one cutting edge extending in a radial direction and one cutting edge extending in an axial direction. Face milling and square shoulder milling are herein collectively designated as end milling.

The cutting inserts 114 are in this embodiment mounted by fastening screws which are positioned in a throughgoing central hole in the cutting inserts and through a screw hole 112 in the milling tool 100. In the shown embodiment each screw hole 112 extend transverse the corresponding insert seat 110 and each screw hole 112 is a throughgoing hole. Each throughgoing screw hole 112 can be said to start in the insert seat 110 and end in either the radially outer surface of the land portion 156, in the trailing surface 158 or partially in the land portion 156 and partially in the trailing surface 158. As will be described in detail later all screw holes 112 will have approximately equal length and end in approximately the same position relative to its corresponding cutting insert 114, i.e. the screw holes 112 end will be at approximately the same axial position from the main front end 106 and at approximately the same tangential distance from respective insert seat 110 for each of the screw holes 112. According to the shown embodiment, the longest screw hole is at most 10 % longer than the shortest screw hole. More preferably, the longest screw hole is at most 5 % longer than the shortest screw hole. In the shown embodiment, all screw holes 112 extend at the same angle to their respective insert seat 110. The fact that the screw holes 112 are made as through holes simplifies the manufacturing of the milling tool 100 and makes it possible to have longer screw threads since the threading can be made from both sides of the hole. Having a longer screw thread makes it possible to have a cutting insert 114 which is more securely and stably mounted in the insert seat 110. The through hole configuration also simplifies exchanging the cutting inserts 114 since the screw can be pushed from the back if it is stuck in the hole. The advantage from the feature that all screw holes 112 have approximately equal length and end in approximately the same relative position is that manufacturing is greatly simplified since the drilling and threading of the holes can be made with the same tool for all screw holes 112 and this process is usually made by automatic robots and the positioning of the robot arm is made simpler if all screw holes 112 end in approximately the same relative position.

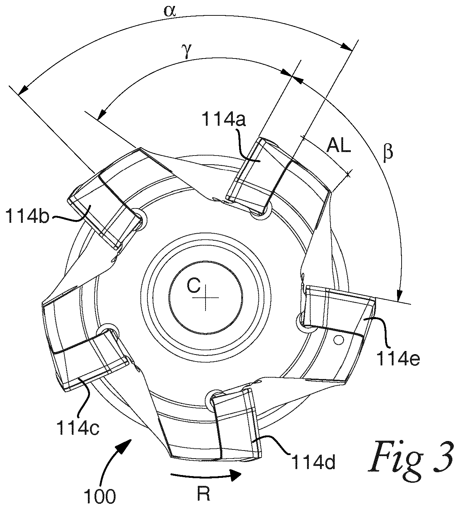

Reference is now made to Fig. 3 which shows an end view of the milling tool 100 from Figs. 1 and 2. A seat pitch angle α is defined as the angle between a radius intersecting a radially outer point in the insert seat 110 of a first land portion 156 and a radius intersecting a corresponding point in a second land portion 156 where the first land portion and the second land portion are adjacent consecutive land portions in the rotational direction.

At least three of the seat pitch angles α differ in value, i.e. they are unequal. More preferably four of the seat pitch angles α differ in value and most preferably all of the seat pitch angles α differ in value. Preferably the largest seat pitch angle α is at least 5° larger than the smallest seat pitch angle. More preferably, the largest seat pitch angle α is at least 8° larger than the smallest seat pitch angle. This configuration enables having a milling tool 100 with differential pitch between the cutting inserts 114, i.e. the engagement frequency of the cutting inserts varies when the milling tool rotates and machines the work material. This reduces the risk of self-oscillation of the milling tool 100 and vibrations is thus reduced. The larger the number of seat pitch angles α that differ in value and the larger the difference is between the largest and smallest seat pitch angle the better the tendency to reduce vibrations will be.

An arc length AL is defined at the front end 106 of the milling tool 100 for each land portion 156 as the circumferential distance along the radial periphery of the milling cutter between the insert seat 110 and the trailing surface 158 for respective land portion 156. The longest arc length AL is at most 10 % longer than the shortest arc length AL. Preferably, the longest arc length AL is at most 5 % longer than the shortest arc length AL. With this configuration the balance of the milling tool 100 is improved and the individual land portions 156 will have a more even strength compared to known milling tools with differential pitch. The amount of material behind all insert seats 110 will be more even compared to known milling tools with differential pitch and since this material is positioned furthest from the central axis C of the milling tool 100 it affects the balance of the milling tool 100 to a large extent. Further, the shortest arc length AL is preferably at least as long as the thickness of the cutting inserts 114 in order to secure sufficient strength for all land portions 156. The thickness of a cutting insert 114 is defined as the distance between the upper side of the cutting insert and the lower side of the cutting insert.

A pitch angle β is defined as the angle between a line parallel to the upper side of a first cutting insert 114 at the front end of the milling tool in a plane perpendicular to the central axis C and a similar parallel line to the upper side of a second insert where the second insert is an adjacent consecutive insert in the rotational direction of the milling tool 100. By using cutting inserts 114 that are all identical to each other the pitch angles β will be equal to the corresponding seat pitch angles α. This is a big advantage since the seat pitch angles α are optimized in respect to differential pitch and vibration reduction. Having all cutting inserts 114 identical also simplifies the handling of the inserts when the cutting inserts 114 are to be replaced since the risk of mixing up different types of cutting inserts is eliminated.

The cutting inserts 114 are preferably also all positioned at the same radial distance from the central axis C. The advantage of this is that all cutting inserts 114 will be in operation during milling regardless of what tooth feed and feed speed that is used.

An opening angle γ for respective cutting insert 114 is defined as the angle between a line parallel to the upper side of a cutting insert 114 at the front end 106 of the milling tool in a plane perpendicular to the central axis C and a line parallel to the trailing surface 158, associated with the same chip room 146 as the cutting insert 114, of the adjacent land portion 156. At least three, preferably all, of the opening angles γ differ in value. Further, the range of the opening angles γ are within 60 - 100°. This configuration even further improves the milling tools 100 ability to reduce vibrations.

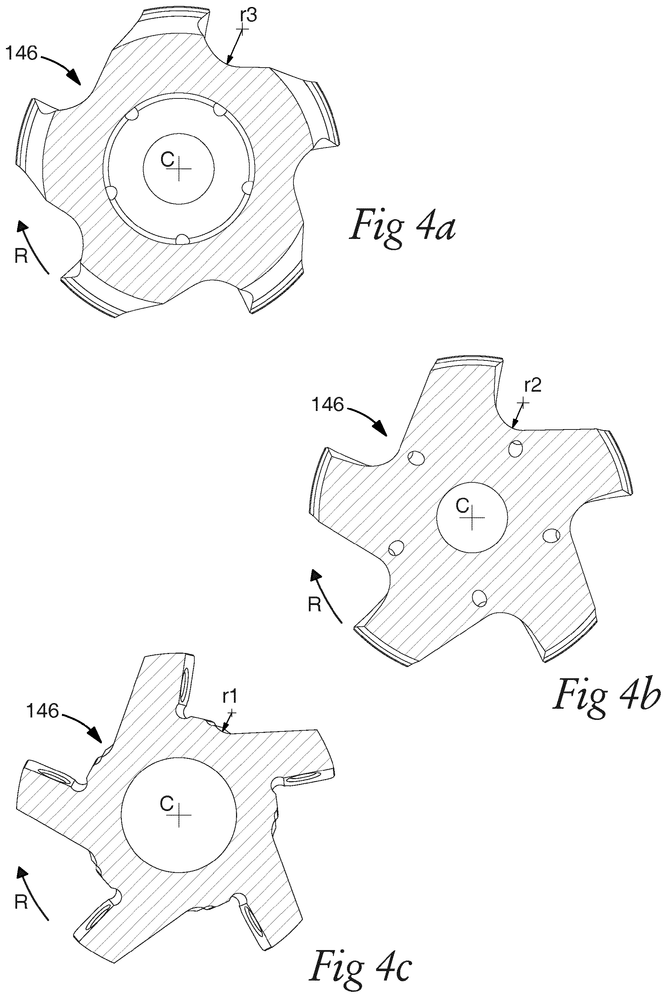

Fig. 4 shows cross sections from the milling tool 100 shown in Fig. 1. Each chip room 146 is delimited by a chip room surface comprising the trailing surface 158 of a first land portion 156, the leading surface 157 of a second land portion 156 and a bottom surface positioned between the trailing surface 158 and the leading surface 157. The first land portion 156 is here rotationally ahead of the second land portion. The smallest radius r of the curvature of each chip room 146 is shown at three different cross sections at varying distance from the front end 106 of the milling tool 100. The cross sections are perpendicular to the central axis C. The smallest radius r2 in a second cross section and the smallest radius r3 in a third cross section are larger than the smallest radius r1 in a first cross section. The first cross section is axially forward of the second cross section and the third cross section.

This configuration alleviates the problem of improving the strength of the milling tool while still having a milling tool with a chip room 146 large enough for accommodating a cutting insert 114. The relatively small radius r1 at the first cross section will enable having a deep chip room 146 in the area closest to the front end 106 of the milling tool 100, where the cutting inserts 114 are usually positioned, without removing too much material from the milling tool since the chip room 146 will be narrow due to the relatively small radius r1. This enables fitting the cutting inserts 114 within the chip room 146. Removing large amounts of material from the milling tool 100 decreases the strength of the milling tool. Having a relatively large radius r2, r3 at the second cross section and the third cross section will enable having a shallow chip room 146 in the area further from the front end 106 of the milling tool compared to the first cross section. Having larger radii and shallower chip rooms 146 in this area does not remove as much material from the milling tool in cross sections where strength is of utmost importance. A larger radius is also more resistant to crack initiation than a small radius is. The combination of having a relatively small radius r1 at the first cross section and larger radii r2, r3 at the second cross section and third cross section thus improves the strength of the milling tool while still having a chip room 146 large enough for accommodating a cutting insert 114.

The bottom surface of the chip room 146 is the part of each cross section perpendicular to the central axis C where the trailing surface 158 and leading surface 157 meet. The curvature with the smallest radius r, in each cross section, of each chip room surface is found in the bottom surface of the chip room 146. The bottom surface is preferably also the part, of each cross section, closest to the central axis C of the milling tool 100.

Preferably, the first cross section is positioned axially along the axial length of the insert seat 110 and the second cross section and the third cross section are positioned axially farther from the front end 106 than the axial length of the insert seat 110. Preferably, the smallest radius r3 in the third cross section is larger than the smallest radius r2 in the second cross section. The radii thus preferably have the relationship r3 > r2 > r1. The smallest radius r1, r2, r3 of the curvature of the chip room 146 thus increases when getting closer to the rear end 104 of the milling tool 100. Preferably, the smallest radius r is strictly increasing between the smallest radius r2 in the second cross section and the smallest radius r3 in the third cross section. More preferably, the smallest radius r increases linearly between the smallest radius r2 in the second cross section and the smallest radius r3 in the third cross section.

The axial length of the insert seat 110 refers to the axial distance along which the insert seat 110 has its extension.

In one embodiment the smallest radius r1 in the first cross section is approximately constant along the whole axial length of the insert seat 110. Preferably, the smallest radius r3 in the third cross section is between 2 and 10 mm. More preferably, the smallest radius r3 in the third cross section is 2 - 4 times larger than the smallest radius r1 in a first cross section.

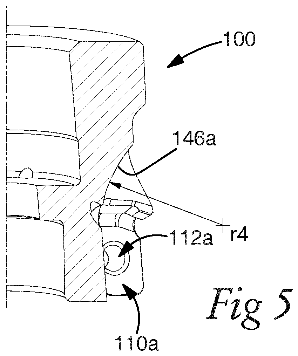

As shown in Fig. 5, the depth of the chip room 146 at the third cross section is smaller than the depth of the chip room at the first cross section.

The depth is defined in each cross section as the shortest distance from the bottom surface of the chip room surface to an imaginary circumferential extension of the peripheral envelope surface 108 of the milling tool 100, i.e. the circular arc obtained when two adjacent land portions 156 are connected by an imaginary arc.

This configuration ensures that the chip room does not have an unnecessary depth in cross sections far from the front end of the milling tool. Smaller depth of the chip room increases the strength of the milling tool.

The radial distance from the central axis C of the milling tool 100 to the bottom surface is further larger at the third cross section compared to at the first cross section.

Preferably, the bottom surface of the chip room 146 in all cross sections between the second cross and the third cross section has the shape of a circular arc r4 in a cross section substantially parallel to the lengthwise direction of the chip room 146.

The lengthwise direction of the chip room 146 is the direction of a line that passes through the smallest radius r2 at the second cross section and the smallest radius r3 at the third cross section.

This configuration enables a smooth transition from a chip room 146 with a relatively large depth close to the front end 106 of the milling tool 100 to a chip room with a relatively small depth axially farther from the front end of the milling tool 100. This smooth transition minimizes the risk for crack initiation points.

As shown in Fig. 1 the chip room 146 preferably extends, in the circumferential direction, to an area located in the imaginary axial extension of the insert seat 110.

The imaginary axial extension refers to the area that occupies the same circumferential position as the insert seat 110 and is axially further from the front end 106 than the insert seat 110.

This configuration ensures that there is enough chip room space in the direct axial vicinity of the insert seat 110 and therefore also implicitly in the axial extension of the cutting inserts 114 where a large enough chip room 146 is necessary to effectively transport the chips away from the worked surface.

The shape of the chip room 146 as disclosed in this document is made possible by free form ball nose milling.

The differential pitch invention disclosed in connection with figures 1 to 3 may be combined with the invention related to the form of the chip room 146 as disclosed in connection with figures 1, 4 and 5 to achieve a milling tool with the combined advantages of these ideas.

The invention is shown incorporated on a milling tool 100 with five cutting inserts 114. It is however equally possible to implement embodiments of the invention on milling tools 100 having other number of cutting inserts 114, such as, but not limited to, 8, 10, 12 or 20. The minimum number of cutting inserts 114 is three.

The invention is shown incorporated on an end milling tool. Some of the embodiments shown are however equally possible to implement on a slot milling tool.

## Claims

1. A metal cutting milling tool (100), comprising:
a body that is rotatable around a central axis (C) in a rotational direction; wherein the body comprises
a front end (106),
- a plurality of land portions (156) extending axially rearwards from the front end (106),
- a plurality of chip rooms (146) extending axially rearwards from the front end,
wherein
- each land portion (156) of the plurality of land portions is delimited by a leading (157) and a trailing surface (158) as seen in the rotational direction, wherein the leading surface (157) is rotationally ahead of the trailing surface (158), wherein each land portion (156) as part of the leading surface (157) in a radially outer and forward region, comprises an insert seat (110) for receiving a cutting insert (114);
- each chip room (146) of the plurality of chip rooms is positioned between two adjacent land portions (156) of the plurality of land portions, wherein each chip room (146) is delimited by a chip room surface comprising the trailing surface (158) of a first land portion (156), the leading surface (157) of a second land portion (156) and a bottom surface positioned between the trailing surface (158) and the leading surface (157), wherein the first land portion (156) is rotationally ahead of the second land portion (156), wherein as seen in a cross section perpendicular to the central axis (C) each chip room surface has a curvature with a smallest radius (r);
- the smallest radius (r2) in a second cross section and the smallest radius (r3) in a third cross section are larger than the smallest radius (r1) in a first cross section, wherein the first cross section is axially forward of the second cross section and the third cross section;
**characterized in that**
the first cross section is positioned axially along the axial length of the insert seat (110) and the second cross section and third cross section are positioned axially farther from the front end (106) than the axial length of the insert seat (110).

2. The metal cutting milling tool according to claim 1, **wherein** the smallest radius (r3) in the third cross section is larger than the smallest radius (r2) in the second cross section.

3. The metal cutting milling tool according to claim 2, **wherein** the smallest radius (r) is strictly increasing between the smallest radius (r2) in the second cross section and the smallest radius (r3) in the third cross section.

4. The metal cutting milling tool according to claim 2 or claim 3, **wherein** the smallest radius (r) increases linearly between the smallest radius (r2) in the second cross section and the smallest radius (r3) in the third cross section.

5. The metal cutting milling tool according to any of the previous claims,
**wherein** the smallest radius (r) is approximately constant in all cross sections along the axial length of the insert seat (110).

6. The metal cutting milling tool according to any of the previous claims,
**wherein** the smallest radius (r3) in the third cross section is 2 - 4 times larger than the smallest radius (r1) in the first cross section.

7. The metal cutting milling tool according to any of the previous claims,
**wherein** the smallest radius (r3) in the third cross section is between 2 and 10 mm.

8. The metal cutting milling tool according to any of the previous claims,
**wherein** a depth of the chip room (146) in a third cross section is smaller than a depth of the chip room (146) in a first cross section.

9. The metal cutting milling tool according to claim 8, **wherein** the bottom surface of the chip room (146), in all axial positions between the second cross section and the third cross section has the shape of a circular arc (r4) in a cross section substantially parallel to the lengthwise direction of the chip room (146).

10. The metal cutting milling tool according to any of the previous claims,
**wherein** in the second cross section the chip room (146) extends, in the circumferential direction, to an area located in the imaginary axial extension of the insert seat (110).

## Patentansprüche

1. Metallzerspanendes Fräswerkzeug (100), umfassend:
einen Körper, der um eine Mittelachse (C) in einer Drehrichtung drehbar ist;
wobei der Körper umfasst
- ein vorderes Ende (106),
- eine Mehrzahl von Stegabschnitten (156), die sich axial rückwärts von dem vorderen Ende (106) erstrecken,
- eine Mehrzahl von Spanräumen (146), die sich axial rückwärts von dem vorderen Ende erstrecken,
wobei
- jeder Stegabschnitt (156) der Mehrzahl von Stegabschnitten durch eine vorlaufende Fläche (157) und eine nachlaufende Fläche (158), wie in der Drehrichtung gesehen, begrenzt ist, wobei die vorlaufende Fläche (157) der nachlaufenden Fläche (158) drehmäßig voraus ist, wobei jeder Stegabschnitt (156) als Teil der vorlaufenden Fläche (157) in einem radial äußeren und vorderen Bereich einen Einsatzsitz (110) zum Aufnehmen eines Schneideinsatzes (114) umfasst;
- jeder Spanraum (146) der Mehrzahl von Spanräumen zwischen zwei benachbarten Stegabschnitten (156) der Mehrzahl von Stegabschnitten angeordnet ist, wobei jeder Spanraum (146) durch eine Spanraumfläche begrenzt ist, umfassend die nachlaufende Fläche (158) eines ersten Stegabschnitts (156), die vorlaufende Fläche (157) eines zweiten Stegabschnitts (156) und eine Bodenfläche, die zwischen der nachlaufenden Fläche (158) und der vorlaufenden Fläche (157) angeordnet ist, wobei der erste Stegabschnitt (156) dem zweiten Stegabschnitt (156) drehmäßig voraus ist, wobei, wie in einem Querschnitt senkrecht zu der Mittelachse (C) gesehen, jede Spanraumfläche eine Krümmung mit einem kleinsten Radius (r) aufweist;
- der kleinste Radius (r2) in einem zweiten Querschnitt und der kleinste Radius (r3) in einem dritten Querschnitt größer sind als der kleinste Radius (r1) in einem ersten Querschnitt, wobei der erste Querschnitt axial vor dem zweiten Querschnitt und dem dritten Querschnitt liegt;
**dadurch gekennzeichnet, dass**
der erste Querschnitt axial entlang der axialen Länge des Einsatzsitzes (110) angeordnet ist und der zweite Querschnitt und dritte Querschnitt axial weiter von dem vorderen Ende (106) entfernt angeordnet sind als die axiale Länge des Einsatzsitzes (110).

2. Metallzerspanendes Fräswerkzeug nach Anspruch 1, wobei der kleinste Radius (r3) in dem dritten Querschnitt größer ist als der kleinste Radius (r2) in dem zweiten Querschnitt.

3. Metallzerspanendes Fräswerkzeug nach Anspruch 2, wobei der kleinste Radius (r) zwischen dem kleinsten Radius (r2) in dem zweiten Querschnitt und dem kleinsten Radius (r3) in dem dritten Querschnitt streng zunehmend ist.

4. Metallzerspanendes Fräswerkzeug nach Anspruch 2 oder Anspruch 3, wobei der kleinste Radius (r) zwischen dem kleinsten Radius (r2) in dem zweiten Querschnitt und dem kleinsten Radius (r3) in dem dritten Querschnitt linear zunimmt.

5. Metallzerspanendes Fräswerkzeug nach einem der vorhergehenden Ansprüche, wobei der kleinste Radius (r) in allen Querschnitten entlang der axialen Länge des Einsatzsitzes (110) annähernd konstant ist.

6. Metallzerspanendes Fräswerkzeug nach einem der vorhergehenden Ansprüche, wobei der kleinste Radius (r3) in dem dritten Querschnitt 2 - 4 mal größer ist als der kleinste Radius (r1) in dem ersten Querschnitt.

7. Metallzerspanendes Fräswerkzeug nach einem der vorhergehenden Ansprüche, wobei der kleinste Radius (r3) in dem dritten Querschnitt zwischen 2 und 10 mm ist.

8. Metallzerspanendes Fräswerkzeug nach einem der vorhergehenden Ansprüche, wobei eine Tiefe des Spanraums (146) in einem dritten Querschnitt kleiner ist als eine Tiefe des Spanraums (146) in einem ersten Querschnitt.

9. Metallzerspanendes Fräswerkzeug nach Anspruch 8, wobei die Bodenfläche des Spanraums (146) in allen axialen Positionen zwischen dem zweiten Querschnitt und dem dritten Querschnitt die Form eines Kreisbogens (r4) in einem Querschnitt im Wesentlichen parallel zu der Längsrichtung des Spanraums (146) aufweist.

10. Metallzerspanendes Fräswerkzeug nach einem der vorhergehenden Ansprüche, wobei sich in dem zweiten Querschnitt der Spanraum (146) in der Umfangsrichtung zu einem Bereich erstreckt, der in der gedachten axialen Verlängerung des Einsatzsitzes (110) angeordnet ist.

## Revendications

1. Outil de fraisage pour coupe de métal (100), comprenant :
un corps qui est apte à tourner autour d'un axe central (C) dans une direction de rotation ; lequel corps comprend
une extrémité avant (106),
- une pluralité de portions de listel (156) qui s'étendent axialement vers l'arrière à partir de l'extrémité avant (106),
- une pluralité de chambres à copeaux (146) qui s'étendent axialement vers l'arrière à partir de l'extrémité avant,
dans lequel
- chaque portion de listel (156) de la pluralité de portions de listel est délimitée par une surface avant (157) et une surface arrière (158) telles qu'observées dans la direction de rotation, la surface avant (157) étant située en avant, en rotation, de la surface arrière (158), chaque portion de listel (156) comprenant, en tant que partie de la surface avant (157) dans une région radialement extérieure et avant, un logement d'insert (110) destiné à recevoir une plaquette de coupe (114) ;
- chaque chambre à copeaux (146) de la pluralité de chambres à copeaux est positionnée entre deux portions de listel adjacentes (156) de la pluralité de portions de listel, chaque chambre à copeaux (146) étant délimitée par une surface de chambre à copeaux comprenant la surface arrière (158) d'une première portion de listel (156), la surface avant (157) d'une seconde portion de listel (156) et une surface de fond positionnée entre la surface arrière (158) et la surface avant (157), la première portion de listel (156) étant située en avant, en rotation, de la seconde portion de listel (156), et, lorsqu'on considère une section transversale perpendiculaire à l'axe central (C), chaque surface de chambre à copeaux présente une courbure ayant un plus petit rayon (r);
- le plus petit rayon (r2) dans une seconde section transversale et le plus petit rayon (r3) dans une troisième section transversale sont supérieurs au plus petit rayon (r1) dans une première section transversale, la première section transversale étant située axialement en avant de la seconde section transversale et de la troisième section transversale ;
**caractérisé en ce que**
la première section transversale est positionnée axialement le long de la longueur axiale du logement d'insert (110) et la seconde section transversale et la troisième section transversale sont positionnées axialement plus éloignées de l'extrémité avant (106) que la longueur axiale du logement d'insert (110).

2. Outil de fraisage pour coupe de métal selon la revendication 1, dans lequel le plus petit rayon (r3) de la troisième section transversale est supérieur au plus petit rayon (r2) de la seconde section transversale.

3. Outil de fraisage pour coupe de métal selon la revendication 2, dans lequel le plus petit rayon (r) est strictement croissant entre le plus petit rayon (r2) dans la seconde section transversale et le plus petit rayon (r3) dans la troisième section transversale.

4. Outil de fraisage pour coupe de métal selon la revendication 2 ou la revendication 3, dans lequel le plus petit rayon (r) augmente linéairement entre le plus petit rayon (r2) dans la seconde section transversale et le plus petit rayon (r3) dans la troisième section transversale.

5. Outil de fraisage pour coupe de métal selon l'une quelconque des revendications précédentes, dans lequel le plus petit rayon (r) est sensiblement constant dans toutes les sections transversales le long de la longueur axiale du logement d'insert (110).

6. Outil de fraisage pour coupe de métal selon l'une quelconque des revendications précédentes, dans lequel le plus petit rayon (r3) dans la troisième section transversale est 2 à 4 fois supérieur au plus petit rayon (r1) dans la première section transversale.

7. Outil de fraisage pour coupe de métal selon l'une quelconque des revendications précédentes, dans lequel le plus petit rayon (r3) dans la troisième section transversale est compris entre 2 et 10mm.

8. Outil de fraisage pour coupe de métal selon l'une quelconque des revendications précédentes, dans lequel la profondeur de la chambre à copeaux (146) dans une troisième section transversale est inférieure à la profondeur de la chambre à copeaux (146) dans une première section transversale.

9. Outil de fraisage pour coupe de métal selon la revendication 8, dans lequel la surface inférieure de la chambre à copeaux (146), dans toutes les positions axiales comprises entre la seconde section transversale et la troisième section transversale, présente la forme d'un arc de cercle (r4) dans une section transversale sensiblement parallèle à la direction longitudinale de la chambre à copeaux (146).

10. Outil de fraisage pour coupe de métal selon l'une quelconque des revendications précédentes, dans lequel, dans la seconde section transversale, la chambre à copeaux (146) s'étend, dans la direction circonférentielle, jusqu'à une zone située dans le prolongement axial imaginaire du logement d'insert (110).
